(19) Europäisches Patentamt / European Patent Office / Office européen des brevets

(11) **EP 4 291 863 B1**

(12) **EUROPÄISCHE PATENTSCHRIFT**

(45) Veröffentlichungstag und Bekanntmachung des Hinweises auf die Patenterteilung:
**26.02.2025   Patentblatt 2025/09**

(21) Anmeldenummer: **22717536.1**

(22) Anmeldetag: **21.03.2022**

(51) Internationale Patentklassifikation (IPC):
*G01K 1/024* (2021.01)   *G01K 3/06* (2006.01)
*H02B 3/00* (2006.01)   *H02B 13/065* (2006.01)
*H02H 5/04* (2006.01)   *H02H 7/22* (2006.01)
*H02B 11/12* (2006.01)

(52) Gemeinsame Patentklassifikation (CPC):
**H02B 3/00; G01K 1/024; G01K 3/06; H02B 13/065; H02H 5/04; H02H 7/22;** G01K 2003/145; H02B 11/12

(86) Internationale Anmeldenummer:
**PCT/EP2022/057362**

(87) Internationale Veröffentlichungsnummer:
**WO 2022/200279 (29.09.2022 Gazette 2022/39)**

(54) **TEMPERATURÜBERWACHUNG FÜR SCHALTANLAGEN**

TEMPERATURE MONITORING FOR SWITCHGEAR

SURVEILLANCE DE TEMPERATURE POUR INSTALLATION DE COMMUTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.03.2021   DE 102021203038**

(43) Veröffentlichungstag der Anmeldung:
**20.12.2023   Patentblatt 2023/51**

(73) Patentinhaber: **Siemens Aktiengesellschaft**
**80333 München (DE)**

(72) Erfinder:
• **BIANCHI, Nicolo**
**90443 Nürnberg (DE)**
• **PFEIFER, Tobias**
**63477 Maintal (DE)**
• **SCHMIDT, Jonas**
**60385 Frankfurt am Main (DE)**
• **STÜTZER, Roland**
**64653 Lorsch (DE)**

(74) Vertreter: **Siemens Patent Attorneys**
**Postfach 22 16 34**
**80506 München (DE)**

(56) Entgegenhaltungen:
EP-A1- 3 171 469       EP-B1- 1 537 647
KR-A- 20160 041 725

## Beschreibung

Technisches Gebiet

Die Erfindung betrifft ein Verfahren zum Betreiben einer Schaltanlage und eine gemäß dem Verfahren betreibbare Schaltanlage.

Technischer Hintergrund

In Schaltanlagen, wie sie in der Hoch- und Mittelspannungstechnik, aber auch in Starkstromniederspannungsanlagen, eingesetzt werden, werden stromführende Komponenten häufig miteinander verschraubt oder auf sonstige Art kraftschlüssig verbunden. Im Gegensatz zu einer stoffschlüssigen Verbindung können sich diese kraftschlüssigen Verbindungen im Betrieb beispielsweise durch Erschütterungen, Kalt-/Warmzyklen oder Materialermüdung lösen. Zudem können an den Kontaktstellen Verschmutzungen oder Oxidationen der Leiter auftreten. In beiden Fällen erhöht sich der Kontaktwiderstand, was eine erhöhte Wärmeentstehung zur Folge hat. Die Wärmeentstehung kann zu einer beschleunigten Oxidation der Leiter führen, so dass sich der Zustand des Kontaktes mit zunehmender Geschwindigkeit verschlechtert. Im Extremfall kann es zu einer Zerstörung der Schaltanlage kommen.

Aus US 2014/0145849A1 ist bekannt, Leitertemperaturen an mehreren Stellen entlang der Phasenleiter sowie weitere Betriebsparameter wie die Umgebungstemperatur und die in den Phasenleitern fließenden Ströme zu messen. Anhand der beiden letztgenannten Parameter sowie bekannter Eigenschaften der Schaltanlage wird eine Vorhersage der zu erwartenden Temperaturen erstellt, die dann mit den Temperaturmesswerten verglichen werden. Bei einer auffallenden Abweichung der Temperaturmesswerte von der Vorhersage kann dann ein Alarm ausgelöst werden. Die Patentdokumente EP 3 171 469 A1 und EP 1 537 647 B1 betreffen den Hintergrund der vorliegenden Erfindung.

Das bekannte Verfahren ist aufwendig zu implementieren und erfordert profundes Wissen über die jeweils zu überwachende Schaltanlage, weshalb es sich die vorliegende Erfindung zur Aufgabe macht, ein einfach durchzuführendes Verfahren zur Temperaturüberwachung von Schaltanlagen einzuführen, das dennoch die Erkennung unzureichender Kontaktzustände erlaubt.

Zusammenfassung der Erfindung

Ein erster Aspekt der Erfindung löst diese Aufgabe durch ein neuartiges Verfahren zum Betreiben einer Schaltanlage mit wenigstens drei einen Laststrom führenden Phasen. Das erfindungsgemäße Verfahren umfasst wenigstens die folgenden Schritte:

Messen einer Leitertemperatur an einem jeweiligen Messpunkt jeder der wenigstens drei Phasen, um jeweilige Phasentemperaturmesswerte zu erhalten; Auswählen einer Teilmenge der Phasentemperaturmesswerte, wobei die Teilmenge eine Mehrzahl von Phasentemperaturmesswerten umfasst und wobei eine Restmenge der Phasentemperaturmesswerte verbleibt; Bilden eines Mittelwerts der Teilmenge der Phasentemperaturmesswerte; Vergleichen der Phasentemperaturmesswerte wenigstens der Restmenge der Phasentemperaturmesswerte mit dem Mittelwert der Teilmenge der Phasentemperaturmesswerte; und Erzeugen eines Alarmsignals, wenn einer der verglichenen Phasentemperaturmesswerte um mehr als einen vorbestimmten Alarmschwellwert von dem Mittelwert der Teilmenge der Phasentemperaturmesswerte abweicht.

Das erfindungsgemäße Verfahren kann mit geringem Aufwand durchgeführt werden und beruht auf der Einsicht, dass mehrphasige Schaltanlagen gewissermaßen eine eingebaute Redundanz aufweisen. Aufgrund der meist ähnlichen Belastung der Phasen und deren wenigstens nahezu identischen Aufbaus sollten daher bei ordnungsgemäßem Zustand der Schaltanlage alle Phasenleiter der Schaltanlage identische Temperaturen aufweisen. Indem eine Teilmenge der Phasentemperaturmesswerte ausgewählt wird, über die ein Mittelwert gebildet wird, werden Messfehler und unterschiedliche Belastungen der Phasen wenigstens teilweise ausgeglichen. Wenigstens die Phasentemperaturmesswerte der Restmenge der Phasentemperaturmesswerte können dann mit dem Mittelwert verglichen werden, wodurch eine zu heiße Phasentemperatur zuverlässig erkannt werden kann. Bei einigen Ausführungsformen der Erfindung können zusätzlich zu den Phasentemperaturmesswerten der Restmenge auch die der Teilmenge mit dem Mittelwert verglichen werden. Eine Messung der Ströme oder der Umgebungstemperatur kann entfallen beziehungsweise braucht nicht berücksichtigt zu werden, wodurch die rechnerische Komplexität des erfindungsgemäßen Verfahrens sehr gering ist.

Als ein Beispiel für eine Schaltanlage mit mehr als drei Phasen wird hierin auch eine Schaltanlage verstanden, bei der wenigstens die Anschlüsse (Sammelschienen und/oder Kabel) jeder elektrischen Phase mehrfach parallel ausgeführt sind, also beispielsweise mit zwei oder mehr Sammelschienen und/oder zwei oder mehr Kabelanschlüssen. Dies wird beispielsweise bei gasisolierten Schaltanlagen, die besonders hohe Lastströme führen getan, um die erforderlichen Leiterdurchmesser bereitzustellen, die dafür erforderlichen Komponenten aber handhabbar zu halten (Flexibilität und Gewicht von Kabeln, Tragfähigkeit und Gasdichte von Durchführungen usw.). Bei solchen Schaltanlagen kann zusätzlich ein Schritt der Mittelwertbildung der an den mehrfach ausgeführten Teilen gewonnenen Phasentemperaturmesswerte ausgeführt werden, bevor die auf diese Weise gewonnenen Mittelwerte als Phasenmesstemperaturwerte dem erfindungsgemäßen Verfahren zugeführt werden. Zudem kann ein Alarmsignal ausgegeben werden, wenn die an den mehrfach ausgeführten Teilen gewonnenen Phasentemperaturmesswerte voneinander um mehr als einen zweiten Alarmschwellwert abweichen.

Dementsprechend sind der Begriff "Phase" und die daraus abgeleiteten Begriffe wie "Phasentemperatur", "mehrphasig" usw. nicht so zu verstehen, dass sich eine "Phase" durch eine zeitlich um einen Teil einer Periodendauer einer Sinusschwingung verschobene Spannung von einer anderen "Phase" unterscheiden muss. Vielmehr können hier auch einzelne Leiter einer Parallelschaltung als "Phasen" bezeichnet werden, obgleich diese alle dieselbe Spannung ohne Phasenverschiebung führen. Ein Beispiel für eine in diesem erweiterten Sinn mehrphasige Schaltanlage ist eine Schaltanlage für die elektrische Versorgung von schienengebundenen Fahrzeugen über eine Oberleitung. Sollen hierbei große Ströme geschaltet werden, kann die einzige Phase (im traditionellen Sinn) auf mehrere parallelgeschaltete Leiter (Phasen im erweiterten Sinn) aufgeteilt werden.

Die Teilmenge der Phasentemperaturmesswerte kann in einer einfach zu implementierenden Ausführungsform der Erfindung so gebildet werden, dass für jeden von N Phasentemperaturmesswerten die verbleibenden N-1 Phasentemperaturmesswerte als Teilmenge gewählt werden und dann der jeweilige Phasentemperaturmesswert mit dem Mittelwert der N-1 Phasentemperaturmesswerte verglichen wird. Dementsprechend werden hierbei die diesbezüglichen Schritte des Verfahrens N mal ausgeführt.

Im Schritt des Auswählens der Teilmenge der Phasentemperaturmesswerte kann aber auch ein Ähnlichkeitskriterium angewandt werden, so dass die Teilmenge diejenigen Phasentemperaturmesswerte enthält, die das Ähnlichkeitskriterium erfüllen oder am meisten erfüllen. Diese Art der Auswahl der Teilmenge ermöglicht es, sogenannte "Ausreißer" unter den Phasentemperaturmesswerten aufzufinden und durch das Vergleichen mit dem Mittelwert der Teilmenge zu bewerten. Das Ähnlichkeitskriterium kann beispielsweise ein Abstand der Phasentemperaturmesswerte zueinander sein, wobei das Ähnlichkeitskriterium von denjenigen Phasentemperaturmesswerten am meisten erfüllt wird, die den geringsten Abstand zueinander aufweisen. Ebenso ist denkbar, dass ein quadratisches Gewichtungskriterium angewendet wird, um einen Bezugsphasentemperaturwert zu erhalten und die Restmenge der Phasentemperaturmesswerte von demjenigen Phasentemperaturmesswert gebildet wird, der den größten Abstand von dem Bezugsphasentemperaturwert aufweist.

Bevorzugt wird auf einen Empfang des Alarmsignals hin eine Sicherheitsmaßnahme durchgeführt. Dabei kann es sich beispielsweise um ein Reduzieren des Laststromes, ein Abschalten der Schaltanlage oder das Veranlassen einer Wartungsmaßnahme handeln. Beispielsweise kann die Dringlichkeit oder der Grad der Sicherheitsmaßnahme von dem Maß der Abweichung über den Alarmschwellwert hinaus abhängig gemacht werden.

Der vorbestimmte Alarmschwellwert kann bevorzugt in Abhängigkeit von einem Laststrom der Schaltanlage vorbestimmt werden. Beispielsweise kann für einen höheren Laststrom auch eine höherer Alarmschwellwert vorgesehen werden, da die Wärmeentstehung proportional zum Quadrat des Laststroms ist und mithin bei gleichbleibenden Qualitäten der Kontakte und steigendem Laststrom auch entsprechend größere Abweichungen zwischen den Phasentemperaturmesswerten zu erwarten sind. Um Fehlalarme bei hohen Lastströmen und das Ausbleiben eines Alarms bei geringen Lastströmen zu vermeiden, kann deshalb ein höherer Alarmschwellwert für einen größeren Laststrom vorbestimmt werden als für einen geringeren Laststrom.

Der vorbestimmte Alarmschwellwert kann auch in Abhängigkeit von dem Mittelwert der Teilmenge der Phasentemperaturmesswerte vorbestimmt werden. Hierbei kann gegenüber der eben erläuterten Ausführungsform der Erfindung vorteilhaft die Messung des Laststroms entfallen, da davon ausgegangen werden kann, dass der Mittelwert der Teilmenge der Phasentemperaturmesswerte maßgeblich durch den fließenden Laststrom bestimmt wird.

Alternativ oder zusätzlich kann der vorbestimmte Alarmschwellwert auch in Abhängigkeit von einer Umgebungstemperatur der Schaltanlage vorbestimmt werden. Bei einer hohen Umgebungstemperatur kann weniger Wärme aus der Schaltanlage abgeführt werden, weshalb der Mittelwert der Teilmenge der Phasentemperaturmesswerte steigt. Dadurch kann es zu einer Verfälschung der Beurteilung des Zustands der Kontakte anhand des Vergleichs der einzelnen Phasentemperaturmesswerte mit ihrem Mittelwert kommen. Dies ist umso wahrscheinlicher, wenn der Alarmschwellwert außerdem in Abhängigkeit des Mittelwerts der Teilmenge vorbestimmt wird.

Grundsätzlich ist es im Rahmen der Erfindung auch möglich, den Alarmschwellwert variabel vorbestimmbar zu gestalten. Das bedeutet, dass abhängig von Aufstellparametern wie beispielsweise der Aufstellhöhe über Normalnull und/oder der jeweiligen Konfiguration einer Schaltanlage ein anderer Alarmschwellwert vorbestimmt wird, mit dem die individuelle Schaltanlage dann betrieben wird.

Der jeweilige Messpunkt jeder der drei Phasen kann insbesondere an einer Sammelschienenverbindung, einer Kabelverbindung, einem oberen Abgang, einem unteren Abgang oder an einer Durchführung angeordnet sein. Vorzugsweise können bei einer Schaltanlage Temperatursensoren an mehreren oder allen genannten Messpunkten vorgesehen sein. In einem solchen Fall können entsprechend die jeweiligen Verbindungen einzeln beurteilt werden, wobei vorzugsweise jeweilige Mittelwerte für jeweilige Teilmengen der an demselben Messpunkt, aber an den unterschiedlichen Phasen gemessenen Phasentemperaturmesswerte gebildet werden, mit denen die an dem jeweiligen Messpunkt gemessenen Phasentemperaturmesswerte oder deren Restmenge dann verglichen werden.

Vorzugsweise umfasst das Alarmsignal eine Information über den jeweiligen Messpunkt und/oder die jeweilige Phase, für die das Abweichen des einen verglichenen Phasentemperaturmesswertes um mehr als den vorbestimmter Alarmschwellwert von dem Mittelwert der Teilmenge der Phasentemperaturmesswerte festgestellt wurde. Dadurch wird die Lokalisierung des unzureichenden Kontakts vereinfacht. Das Alarmsignal kann beispielsweise an eine entfernte Leitstelle übertragen werden, von wo aus ggf. geeignete Sicherheitsmaßnahmen veranlasst werden können.

Bei Ausführungsformen der Erfindung können auch unterschiedliche Schweren einer Schädigung eines Kontaktes beziehungsweise unterschiedliche Arten von Sicherheitsmaßnahmen oder unterschiedliche Dringlichkeiten dieser Sicherheitsmaßnahmen erfasst werden. Beispielsweise kann ein Warnsignal erzeugt werden, wenn der eine verglichene Phasentemperaturmesswert um mehr als einen vorbestimmten Warnschwellwert, der kleiner als der Alarmschwellwert ist, von dem Mittelwert der Teilmenge der Phasentemperaturmesswerte abweicht. Auf das Warnsignal hin kann dann eine längerfristige oder weniger drastische Sicherheitsmaßnahme vorgesehen sein als bei Empfang des Alarmsignals. Hierbei ist denkbar, weitere Schwellwerte vorzusehen, die dementsprechend unterschiedliche Aussagen über die Qualität eines Kontaktes machen.

Ein zweiter Aspekt der Erfindung betrifft eine Schaltanlage mit wenigstens drei Phasen, an jeweiligen Messpunkten jeder der wenigstens drei Phasen angeordneten Temperatursensoren und einer mit den Temperatursensoren verbundenen Steuereinheit. Die Temperatursensoren sind dazu ausgebildet, Leitertemperaturen zu messen, um Phasentemperaturmesswerte zu erhalten. Die Steuereinheit ist dabei dazu ausgebildet, das Verfahren des vorhergehenden Erfindungsaspekts durchzuführen.

Kurzbeschreibung der Figuren

Die Erfindung wird nachfolgend anhand von Abbildungen von Ausführungsbeispielen näher erläutert. Es zeigen:

Fig. 1    ein Ausführungsbeispiel einer erfindungsgemäßen Schaltanlage; und

Fig. 2    ein Ausführungsbeispiel des erfindungsgemäßen Verfahrens zum Betreiben einer Schaltanlage.

Ausführliche Figurenbeschreibung

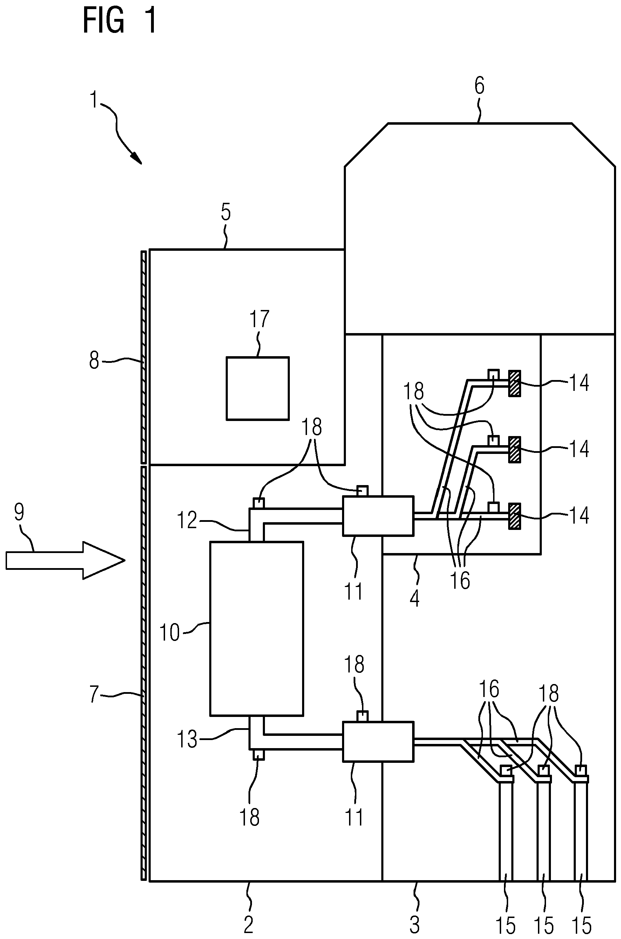

Fig. 1 zeigt ein Ausführungsbeispiel einer erfindungsgemäßen Schaltanlage 1 in einer Querschnittsdarstellung. Die Schaltanlage 1 ist vorliegend als luftisolierte Schaltanlage ausgeführt, die Erfindung kann jedoch auch auf gasisolierte oder sonstige Schaltanlagen der Nieder-, Mittel- oder Hochspannungstechnik angewendet werden.

Die Schaltanlage 1 von Fig. 1 besitzt vier verschiedene Räume, die voneinander durch Trennwände abgetrennt sind. Ein Sammelschienenraum 4 beherbergt einen Satz von Sammelschienen 14 (gewöhnlich eine Schiene pro Phase des Energienetzes), über die elektrische Energie zwischen mehreren nebeneinander angeordneten Schaltanlagen verteilt wird. Die jeweiligen Sammelschienenräume 4 können dabei direkt miteinander verbunden sein und somit einen gemeinsamen Sammelschienenraum bilden oder voneinander abgetrennt sein.

Die in dem Sammelschienenraum 4 angeordneten Sammelschienen 14 sind über Verbindungsleiter 16 mit oberen Abgängen 12 eines in einem Geräteraum 2 befindlichen Schaltgerätes 10 verbunden, wobei beispielsweise sogenannte Kontakttulpen oder Fingerkontakte zur Bereitstellung von lösbaren Kontakten für eine einfache Austauschbarkeit des Schaltgerätes 10 verwendet werden können. Als Schaltgerät 10 können beispielsweise Leistungsschalter, Lastschalter, Kurzschließer, Erdungsschalter, Sicherungen und dergleichen mehr zum Einsatz kommen.

Untere Abgänge 13 des Schaltgerätes 10 sind in entsprechender Weise über Verbindungsleiter 16 mit in einem Kabelanschlussraum 3 befindlichen Kabeln 15 verbunden, die als Eingänge oder Ausgänge der von der Schaltanlage 1 verteilten elektrischen Energie dienen können.

Die Verbindungsleiter 16 werden dabei über Durchführungen 11 zwischen dem Geräteraum 2 einerseits und dem Sammelschienenraum 4 beziehungsweise dem Kabelanschlussraum 3 elektrisch mit dem Schaltgerät 10 verbunden.

Ein Niederspannungsraum 5 kann Steuerelektronik, Mess- und Meldegeräte und andere derartige Niederspannungshilfsgeräte aufnehmen. Diese Niederspannungshilfsgeräte können Messwerte von den verschiedenen stromführenden und spannungstragenden Komponenten einlesen und für Steuer- und Schutzzwecke an entfernte Vorrichtungen weiterleiten und/oder lokal anzeigen und/oder automatisiert auswerten. Zur Bereitstellung solcher Messwerte werden üblicherweise an den Sammelschienen und den Kabeln befestigte Strom- und Spannungswandler vorgesehen, deren Messausgänge mit den Niederspannungshilfsgeräten verbunden sind.

Wartungspersonal kann auf den Geräteraum 2 und auf den Niederspannungsraum 5 durch jeweilige Zugangstüren 7 und 8 zugreifen. Die Räume 2, 3 und 4 sind mit einem Heißgaskanal 6 verbunden, der während einer Fehlfunktion wie einem Lichtbogen in der Schaltanlage entstehende heiße Gase aufnehmen, von dieser wegleiten und an einer für etwaiges in der Nähe befindliches Personal ungefährlichen Stelle in die Umgebung entlassen kann.

Die Verbindungen zwischen den oberen und unteren Abgängen 12, 13 und dem Schaltgerät 10, zwischen den oberen und unteren Abgängen 12, 13 und den Durchführungen 11, zwischen den Durchführungen 11 und den Verbindungsleitern 16 sowie zwischen den Verbindungsleitern 16 und den Sammelschienen 14 beziehungsweise den Kabeln 15 können unter Verwendung von kraftschlüssigen Verbindungen wie Schraub- oder Klemmverbindungen vorgenommen werden. An diesen Punkten kann es daher zu erhöhter Wärmeentwicklung kommen, wenn die Qualität eines derart hergestellten elektrischen Kontaktes zu gering ist, weshalb einer, mehrere oder alle genannten Punkte abhängig von der jeweiligen Ausführung einer Schaltanlage 1 als Messpunkt für die Anwendung des erfindungsgemäßen Verfahrens in Betracht kommen. Demzufolge können an diesen Stellen an jeder Phase der Schaltanlage jeweilige Temperatursensoren 18 angeordnet sein, welche mit einer Steuereinheit 17 kommunikativ verbunden sind. Die kommunikative Verbindung zwischen den Temperatursensoren 18 und der Steuereinheit 18 kann über eine elektrische oder optische Datenleitung, eine drahtlose Kommunikationsverbindung oder über eine Nahfeldkommunikation verwirklicht sein. In letztgenanntem Fall werden die Temperatursensoren 18 über nicht dargestellte Antennen in den Räumen 2, 3, 4 der Schaltanlage 1 elektromagnetisch angeregt und anhand ihrer Reaktion auf die elektromagnetische Anregung ausgelesen. Dies bietet den Vorteil, die Temperatursensoren 18 galvanisch getrennt von der Steuereinheit 17 und zudem ohne Batterien für die Versorgung einer drahtlosen Kommunikationsverbindung ausführen zu können.

Die Steuereinheit 17 ist vorliegend im Niederspannungsraum 5 angeordnet und kann Teil eines sonstigen Niederspannungshilfsgeräts sein. Die Steuereinheit 17 ist dazu ausgebildet, das erfindungsgemäße Verfahren auszuführen.

Die Erfindung kann ohne weiteres auch auf gasisolierte Schaltanlagen angewendet werden. Hierbei bieten sich als Messpunkt für die Phasentemperaturmesswerte insbesondere die Kabelanschlüsse an, da diese häufig außerhalb des gasisolierten Raumes liegen und somit einfach mit Temperatursensoren ausgestattet werden können. Der Einsatz von passiven drahtlosen Temperatursensoren erlaubt aber auch bei gasisolierten Schaltanlagen die Überwachung weiterer, im Inneren des gasisolierten Bereichs liegender Messpunkte, ohne dass hierbei der Aufwand für infrarotdurchlässige und gasdichte Inspektionsfenster betrieben werden müsste.

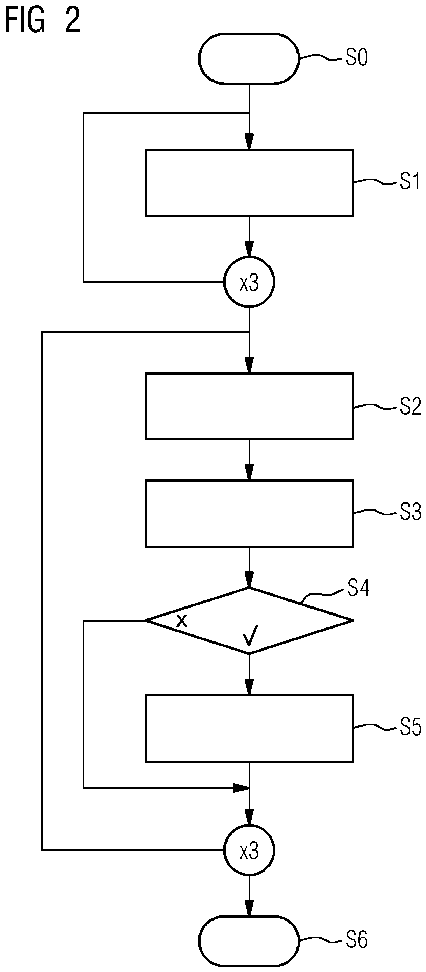

Fig. 2 zeigt ein Ausführungsbeispiel des erfindungsgemäßen Verfahrens zum Betreiben einer Schaltanlage, beispielsweise eine Schaltanlage 1 wie in Fig. 1 dargestellt, in Form eines Flussdiagramms. Das Verfahren beginnt in einem Startschritt S0 und setzt in einen Schritt S1 fort, in dem eine Leitertemperatur an einem Messpunkt der Schaltanlage gemessen wird, um jeweilige Phasentemperaturmesswerte zu erhalten. Da eine Schaltanlage üblicherweise dreiphasig ausgeführt ist, wird der Schritt S1 dreimal ausgeführt, einmal für jede Phase. Es ist selbstredend ebenfalls möglich, in einer einzigen Ausführung des Schrittes S1 Phasentemperaturmesswerte für alle drei Phasen gleichzeitig auszulesen. Der Schritt S1 kann auch für weitere Messpunkte der Schaltanlage wiederholt werden.

In einem nachfolgenden Schritt S2 wird eine Teilmenge der Phasentemperaturmesswerte ausgewählt, wobei die Teilmenge eine Mehrzahl von Phasentemperaturmesswerten umfasst und wobei eine Restmenge der Phasentemperaturmesswerte verbleibt. Bei einer dreiphasig ausgeführten Schaltanlage wird die Teilmenge regelmäßig zwei Phasentemperaturmesswerte und die Restmenge einen Phasentemperaturmesswert enthalten.

In Schritt S3 wird ein Mittelwert der in Schritt S2 ausgewählten Teilmenge der Phasentemperaturmesswerte gebildet. Dieser Mittelwert wird anschließend in Schritt S4 mit dem oder den Phasentemperaturmesswerten wenigstens der Restmenge verglichen. Dabei wird geprüft, ob der verglichene Phasentemperaturmesswert um mehr als einen vorbestimmten Alarmschwellwert von dem Mittelwert der Teilmenge der Phasentemperaturmesswerte abweicht. Es wird also insbesondere geprüft, ob ein Phasentemperaturmesswert der Restmenge größer als der Mittelwert der Teilmenge der Phasentemperaturmesswerte zuzüglich des vorbestimmten Alarmschwellwertes ist. Oder als Formel ausgedrückt wird geprüft, ob:

$$T_R > \bar{T}_T + \varDelta T,$$

wobei $T_R$ den verglichenen Phasentemperaturmesswert der Restmenge, $\bar{T}_T$ den Mittelwert der Phasentemperaturmesswerte der Teilmenge und $\varDelta T$ den vorbestimmten Alarmschwellwert bezeichnen. Ist dies für den verglichenen Phasentemperaturmesswert der Fall, wird in Schritt S5 ein Alarmsignal erzeugt. Im anderen Fall wird Schritt S5 übersprungen. Der vorbestimmte Alarmschwellwert kann, wie oben ausführlich erläutert, dabei von weiteren Parametern beziehungsweise Messwerten abhängig vorbestimmt sein, insbesondere von einem Laststrom der Schaltanlage, dem Mittelwert der Phasentemperaturmesswerte oder einer Umgebungstemperatur der Schaltanlage.

Die Schritte S2, S3, S4 und S5 werden in dem vorliegenden Ausführungsbeispiel wie der Schritt S1 für jede der drei Phasen der Schaltanlage durchgeführt, wobei das oben zur gleichzeitigen oder sequentiellen Ausführung Gesagte auch hier gilt. Bei Ausführungsformen, bei denen ein Ähnlichkeitskriterium zur Anwendung kommt, kann die mehrfache Ausführung der Schritte S2 bis S5 auch entfallen. Beispielsweise können bei einer dreiphasigen Schaltanlage die beiden Phasentemperaturmesswerte als Teilmenge ausgewählt werden, die die geringste Temperaturdifferenz aufweisen. Aus diesen beiden Phasentemperaturmesswerten wird dann ein Mittelwert gebildet, der mit dem verbleibenden Phasentemperaturmesswert verglichen wird. Bei derartigen Ausführungsformen des erfindungsgemäßen Verfahrens kann die Temperaturüberwachung der Schaltanlage mit nur einem einzigen Vergleich durchgeführt werden.

Das Verfahren von Fig. 2 kann in Schritt S6 enden oder es wird, gegebenenfalls nach Verstreichen einer Wartezeitspanne, zu Schritt S0 zurückgekehrt werden.

Das erfindungsgemäße Verfahren zum Betreiben einer Schaltanlage und die erfindungsgemäße Schaltanlage erlauben ein zuverlässiges Erkennen von schlechten oder verschlechterten Verbindungen in der Schaltanlage, ohne dass eine aufwendige Modellierung der Schaltanlage und ihres Betriebs notwendig wäre.

Die Erfindung wurde unter Bezugnahme auf bevorzugte Ausführungsbeispiele näher erläutert. Die Ausführungsbeispiele dienen dabei lediglich der Veranschaulichung und sollen den Schutzbereich der Erfindung, der ausschließlich durch die nachfolgenden Ansprüche definiert wird, nicht einschränken.

Bezugszeichenliste

| 1 | luftisolierte Schaltanlage |
| 2 | Geräteraum |
| 3 | Kabelanschlussraum |
| 4 | Sammelschienenraum |
| 5 | Niederspannungsraum |
| 6 | Heißgaskanal |
| 7, 8 | Zugangstüren |
| 9 | Zugriffsrichtung |
| 10 | Schaltgerät |
| 11 | Durchführungen |
| 12 | oberer Abgang |
| 13 | unterer Abgang |
| 14 | Sammelschiene |
| 15 | Kabel |
| 16 | Verbindungsleiter |
| 17 | Steuereinheit |
| 18 | Temperatursensor |

**Patentansprüche**

1. Ein Verfahren zum Betreiben einer Schaltanlage (1) mit wenigstens drei einen Laststrom führenden Phasen, wobei das Verfahren wenigstens die folgenden Schritte umfasst:

Messen einer Leitertemperatur an einem jeweiligen Messpunkt jeder der wenigstens drei Phasen, um jeweilige Phasentemperaturmesswerte zu erhalten;

Auswählen einer Teilmenge der Phasentemperaturmesswerte, wobei die Teilmenge eine Mehrzahl von Phasentemperaturmesswerten umfasst und wobei eine Restmenge der Phasentemperaturmesswerte verbleibt;

Bilden eines Mittelwerts der Teilmenge der Phasentemperaturmesswerte;

Vergleichen der Phasentemperaturmesswerte wenigstens der Restmenge der Phasentemperaturmesswerte mit dem Mittelwert der Teilmenge der Phasentemperaturmesswerte; und

Erzeugen eines Alarmsignals, wenn einer der verglichenen Phasentemperaturmesswerte um mehr als einen vorbestimmten Alarmschwellwert von dem Mittelwert der Teilmenge der Phasentemperaturmesswerte abweicht.

2. Das Verfahren des vorhergehenden Anspruchs, bei dem im Schritt des Auswählens der Teilmenge der Phasentemperaturmesswerte ein Ähnlichkeitskriterium angewandt wird und die Teilmenge diejenigen Phasentemperaturmesswerte enthält, die das Ähnlichkeitskriterium erfüllen oder am meisten erfüllen.

3. Das Verfahren des vorhergehenden Anspruchs, bei dem das Ähnlichkeitskriterium ein Abstand der Phasentemperaturmesswerte zueinander ist, wobei das Ähnlichkeitskriterium von denjenigen Phasentemperaturmesswerten am meisten erfüllt wird, die den geringsten Abstand zueinander aufweisen.

4. Das Verfahren eines der vorhergehenden Ansprüche, bei dem auf einen Empfang des Alarmsignals hin eine Sicherheitsmaßnahme durchgeführt wird.

5. Das Verfahren des vorhergehenden Anspruchs, bei dem die Sicherheitsmaßnahme ein Reduzieren des Laststromes, ein Abschalten der Schaltanlage (1) oder das Veranlassen einer Wartungsmaßnahme umfasst.

6. Das Verfahren eines der vorhergehenden Ansprüche, bei dem der vorbestimmte Alarmschwellwert in Abhängigkeit von dem Laststrom, von dem Mittelwert der Teilmenge der Phasentemperaturmesswerte und/oder von einer Umgebungstemperatur der Schaltanlage (1) vorbestimmt wird.

7. Das Verfahren eines der vorhergehenden Ansprüche, bei dem der jeweilige Messpunkt jeder der drei Phasen an einer Sammelschienenverbindung, einer Kabelverbindung, einem oberen Abgang, einem unteren Abgang oder an einer Durchführung (11) angeordnet ist.

8. Das Verfahren eines der vorhergehenden Ansprüche, bei dem das Alarmsignal eine Information über den jeweiligen Messpunkt und/oder die jeweilige Phase umfasst, für die das Abweichen des einen verglichenen Phasentemperaturmesswertes um mehr als den vorbestimmter Alarmschwellwert von dem Mittelwert der Teilmenge der Phasentemperaturmesswerte festgestellt wurde.

9. Das Verfahren eines der vorhergehenden Ansprüche, bei dem ein Warnsignal erzeugt wird, wenn der eine verglichene Phasentemperaturmesswert um mehr als einen vorbestimmten Warnschwellwert, der kleiner als der Alarmschwellwert ist, von dem Mittelwert der Teilmenge der der Phasentemperaturmesswerte abweicht.

10. Eine Schaltanlage (1) mit wenigstens drei Phasen, an jeweiligen Messpunkten jeder der wenigstens drei Phasen angeordneten Temperatursensoren (18), die ausgebildet sind, Leitertemperaturen zu messen, um Phasentemperaturmesswerte zu erhalten, und einer mit den Temperatursensoren (18) verbundenen Steuereinheit (17), **dadurch gekennzeichnet, dass** die Steuereinheit (17) ausgebildet ist, das Verfahren eines der vorhergehenden Ansprüche durchzuführen.

**Claims**

1. Method for operating a switchgear installation (1) having at least three phases carrying a load current, wherein the method comprises at least the following steps of:

measuring a conductor temperature at a respective measurement point of each of the at least three phases in order to obtain respective phase temperature measured values;
selecting a subset of the phase temperature measured values, wherein the subset comprises a plurality of phase temperature measured values, and wherein a residual set of the phase temperature measured values remains;
forming an average value of the subset of the phase temperature measured values;
comparing the phase temperature measured values of at least the residual set of the phase temperature measured values with the average value of the subset of the phase temperature measured values; and
generating an alarm signal when one of the phase temperature measured values compared differs from the average value of the subset of the phase temperature measured values by more than a predetermined alarm threshold value.

2. Method of the preceding claim, in which, in the step of selecting the subset of the phase temperature measured values, a similarity criterion is applied and the subset contains those phase temperature measured values that satisfy or best satisfy the similarity criterion.

3. Method of the preceding claim, in which the similarity criterion is a spacing between the phase temperature measured values, wherein the similarity criterion is best satisfied by those phase temperature measured values which have the smallest spacing between one another.

4. Method of one of the preceding claims, in which a safety measure is carried out in response to reception of the alarm signal.

5. Method of the preceding claim, in which the safety measure comprises reducing the load current, shutting down the switchgear installation (1) or initiating a maintenance measure.

6. Method of one of the preceding claims, in which the predetermined alarm threshold value is predetermined on the basis of the load current, the average value of the subset of the phase temperature measured values and/or an ambient temperature of the switchgear installation (1).

7. Method of one of the preceding claims, in which the respective measurement point of each of the three phases is arranged on a busbar connection, a cable connection, an upper outgoing circuit, a lower outgoing circuit or on a bushing (11).

8. Method of one of the preceding claims, in which the alarm signal comprises information about the respective measurement point and/or the respective phase, for which the deviation of the one compared phase temperature measured value from the average value of the subset of the phase temperature measured values by more than the predetermined alarm threshold value was determined.

9. Method of one of the preceding claims, in which a warning signal is generated when the one compared phase temperature measured value deviates from the average value of the subset of the phase temperature measured values by more than a predetermined warning threshold value which is less than the alarm threshold value.

10. Switchgear installation (1) having at least three phases, temperature sensors (18) which are arranged at respective measurement points of each of the at least three phases and are designed to measure conductor temperatures in order to obtain phase temperature measured values, and a control unit (17) connected to the temperature sensors (18), **characterized in that** the control unit (17) is designed to carry out the method of one of the preceding claims.

## Revendications

1. Un procédé pour faire fonctionner une installation (1) de commutation ayant au moins trois phases conduisant un courant de charge, dans lequel le procédé comprend au moins les stades suivants :

   mesure d'une température de conducteur en un point de mesure respectif des au moins trois phases pour obtenir des valeurs respectives de mesure de la température de phase ;
   sélection d'un ensemble partiel des valeurs de mesure de température de phase, l'ensemble partiel comprenant une pluralité de valeurs de mesure de température de phase et dans lequel un ensemble restant des valeurs de mesure de température de phase subsiste ;
   formation d'une valeur moyenne de l'ensemble partiel des valeurs de mesure de température de phase ;
   comparaison des valeurs de mesure de température de phase au moins de l'ensemble restant des valeurs de mesure de température de phase à la valeur moyenne de l'ensemble partiel des valeurs de mesure de température de phase ; et production d'un signal d'alerte, si l'une des valeurs de mesure de température de phase comparées diffère, de plus d'une valeur de seuil d'alerte déterminée à l'avance, de la valeur moyenne de l'ensemble partiel des valeurs de mesure de température de phase.

2. Le procédé suivant la revendication précédente, dans lequel, dans le stade de la sélection de l'ensemble partiel des valeurs de mesure de température de phase, on applique un critère de similitude et l'ensemble partiel contient les valeurs de mesure de température de phase, qui satisfont le critère de similitude ou qui le satisfont au mieux.

3. Le procédé suivant la revendication précédente, dans lequel le critère de similitude est une distance entre elles des valeurs de mesure de température de phase, dans lequel le critère de similitude est satisfait au mieux par les valeurs de mesure de température de phase, qui ont entre elles l'écart le plus petit.

4. Le procédé suivant l'une des revendications précédentes, dans lequel on prend une mesure de sécurité à la réception du signal d'alerte.

5. Le procédé suivant l'une des revendications précédentes, dans lequel la mesure de sécurité comprend une réduction du courant de charge, une mise hors circuit de l'installation (1) de commutation ou la provocation d'une mesure d'entretien.

6. Le procédé suivant l'une des revendications précédentes, dans lequel on détermine à l'avance la valeur de seuil d'alerte déterminée à l'avance en fonction du courant de charge, de la valeur moyenne de l'ensemble partiel des valeurs de mesure de température et/ou d'une température ambiante de l'installation (1) de commutation.

7. Le procédé suivant l'une des revendications précédentes, dans lequel le point de mesure respectif de chacune des trois phases est disposé à une liaison par rail collecteur, à une liaison par câble, à une sortie supérieure, à une sortie inférieure ou à une traversée (11).

8. Le procédé suivant l'une des revendications précédentes, dans lequel le signal d'alerte comprend une information sur le point de mesure respectif et/ou la phase respective, pour laquelle on a constaté que l'écart de la une valeur de mesure de température de phase, comparée à la valeur moyenne de l'ensemble partiel des valeurs de mesure de température de phase, est supérieure à la valeur de seuil d'alerte déterminée à l'avance.

9. Le procédé suivant l'une des revendications précédentes, dans lequel on produit un signal d'alerte, si la une valeur de mesure de température de phase comparée s'écarte, de la valeur moyenne de l'ensemble partiel des valeurs de mesure de température de phase, de plus qu'une valeur de seuil d'avertissement déterminée à l'avance, qui est plus petite que la valeur de seuil d'alerte.

10. Installation (1) de commutation ayant au moins trois phases, des capteurs (18) de température disposés entre des points de mesure respectifs de chacune des au moins trois phases, qui sont constitués pour mesurer des températures de conducteur, afin d'obtenir des valeurs de mesure de température de phase, et une unité (17) de commande reliée aux capteurs (18) de température, **caractérisée en ce que** l'unité (17) de commande est constituée pour exécuter le procédé suivant l'une des revendications précédentes.

FIG 1

## FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140145849 A1
- EP 3171469 A1

- EP 1537647 B1